# EUROPEAN PATENT APPLICATION

(11) **EP 0 761 090 A1**
(43) Date of publication of application: **12.03.1997**
(21) Application number: 95120744.8
(22) Date of filing: 29.12.1995
(51) Int. Cl.: A01G 27/00

(54) **Automatic device for irrigation with or without special water droppers including a water dropper tank**

(30) Priority: 29.08.1995 EP 95113553
(71) Applicant: ALITECO AG, CH-6300 Zug (CH)
(72) Inventor: Sgherri, Mauro, c/o Aliteco AG, CH-6300 Zug (CH); Caprioli, Pier Luigi, c/o Aliteco AG, CH-6300 Zug (CH)
(74) Representative: Baronetzky, Klaus, Dipl.-Ing.

(57) **Abstract**

An automatic device for irrigation is partially immersed into a container to be filled with water and comprises a timer to enable irrigation at repeated time intervals for a predetermined period. The device is free from any connection to any water supply source, and preferably to any mains voltage supply but comprises a battery for operation.

## Description

The present invention refers to an automatic device for irrigation according to the opening portion of claim 1 and is especially related to automatic irrigation equipment for irrigation of plants and/or flowers. The technical and functional innovations make the device easy and reliable to use in any environment.

There are several automatic devices for irrigation intended to water plants in pots or the like during the absence of the owners. Among others, such a device is known from DE-A-23 36 739. This device works with a water tank arranged above of a water outlet in order to allow the water to slowly drop out of the water tank.

The water tank of this device is connected to a water outlet and has a control valve in order to maintain the level of water in the water tank. A connection to the water outlet which is required with this device is undesirable as, especially during longer times of absence, a hose for connection between the water tank and the water outlet may break and/or the valve may break down such that there is the danger of undesired overflow. Also, sometimes water outlets or water taps are not available.

A similar device is known from FR-A1-2 267 699. This device is also connected to a public water outlet and provides an intermittent watering by means of a receptacle. A water collector or vessel is intended to swing on a pivot axis depending on its filling level. However, if the bearing friction is too high, the vessel will not swing but merely turn to an inclined position, and water will slowly drop into and out of this vessel.

It has been proposed to use capillarity to allow a plant to be supplied with water from a receptacle arranged lower than the plant. Such a watering device is known from e.g. WO 87/06095. However, it tends to moisten a part of the pot continously while the remainder stays dry which is rather undesirable.

Therefore, it is an object of the present invention to provide an automatic device for irrigation according to the opening portion of claim 1 which is intended to overcome the disadvantages of the state of the art and provides a reliable irrigation according to the plants' need.

This object is settled by the features of claim 1. Advantageous developments may be taken from the subclaims.

One of the main features of the device is that it requires no electricity and water supply source. This is highly advantageous when irrigation is required in environments where there is no electricity and/or water supply, as well as in places (eg. apartments) where these supplies are cut off, for example during long periods of absence.

Advantageously, the invention provides a reliable irrigation independently of public water and electricity supply. Therefore, a danger of overflow and breakdown is avoided and a safe operation even in extended periods of absence is possible. Preferably, the invention provides a timer which intermittently switches on the irrigation, with an off-time being e.g. 24 hours and an on-time being e.g. selectable from 1 to 4 minutes. The invention may provide a battery operated pump which then supplies water to all plants to be irrigated independently of their relative height to the water supply. An alternative is to use a preferably bi-stable on/off valve which is controlled by the timer and allows a low-energy long-term operation with batteries even for years, provided, the vessel into which the device according to the invention is placed, is big enough.

Any suitable vessel such as a bucket or the like may be used as a water supply for the automatic device for irrigation according to the invention. It is particularly advantageous that the device may be operated in any vessel or tank by being placed in this vessel filled with water. Even a bottle with a wide neck may be used as such a vessel as the inventive device is quite slim and has a small base area.

The energy supply of the automatic device for irrigation according to the invention may be achieved by batteries, i.e. dry cells or accumulators. Even with the embodiment incorporating the pump a sufficient energy supply is provided for an extended period such as 30 days at minimum.

According to a preferred embodiment, the invention comprises at least one water dropper tank, especially one water dropper tank for every plant to be irrigated. This water dropper tank provides a small reservoir for water and is filled up during the on-time but delivers the water slowly during a delivery time. Also, such a water dropper tank may be equipped with a stop valve allowing to select the amount of water for each plant depending on its need. The height of the stop or float valve may be selected such that e.g. the float valve stops the filling at 50 ml, 100 ml, 150 ml or 200 ml which then is delivered slowly. In this embodiment, the pump may be supplied with an overpressure switch intended to switch off the pump motor as soon as all stop valves of all water dropper tanks are closed.

Further details, features and advantages of the invention may be taken from the following description of two embodiments of the invention.

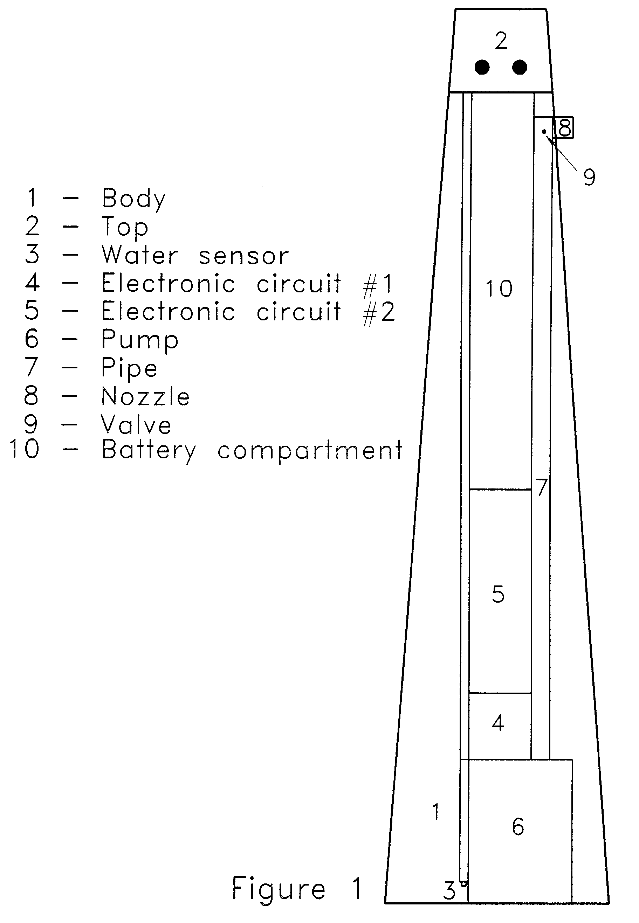

- Fig. 1: shows a part of the automatic device for irrigation according to a first embodiment of the invention;
- Fig. 2: shows the automatic device for irrigation according to Fig. 1 equipped with irrigators; and

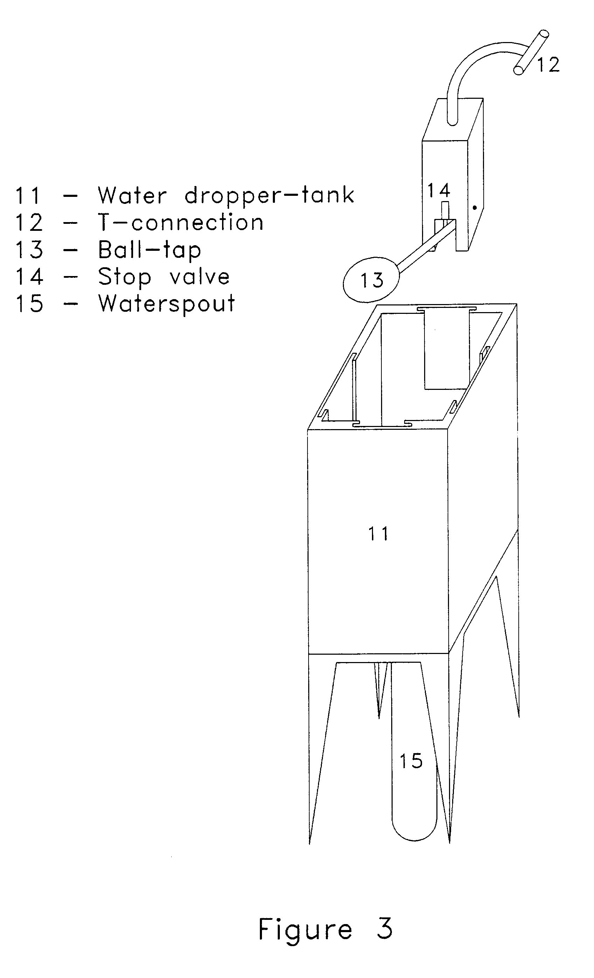

- Fig. 3: shows a water dropper tank instead of an irrigator, according to the second embodiment of the invention.

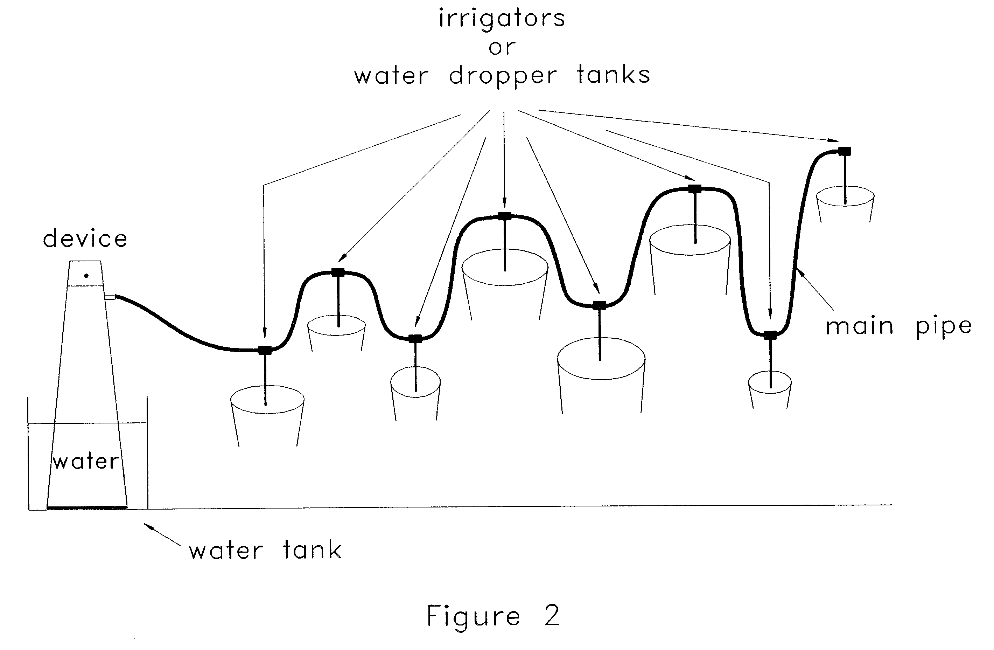

By immersing the device 1 in a container of water as illustrated in Figure 2, the sensor 3 connected to the electronic circuit 4, detects such immersion, subsequently activating the device. After a few seconds the electronic circuit 5 starts up a pump 6 which sucks up the water from the container and sends it through pipe 7 towards a nozzle 8.

A main pipe connected to the nozzle 8 transports water to a series of water droppers placed at each plant to be watered.

After termination of one of four available time intervals determined by the position of a setting switch 2 with respect to the body or device 1, the pump 6 turns off automatically while the electronic circuit 5 continues to work as a timer by repeating the time-activated cycle every 24 hours. The cycle continues as long as sensor 3 and related electronic circuit 4 detect the presence of water in the container.

The selection of a time interval, according to which the pump turns on, is made before immersing the device in the water by means of turning and inserting an item comprising the setting switch 2 into the body (device) 1 and matching the indication of the selected time interval on item 2 with the side of nozzle 8. It is also possible to determine the quantity of water to distribute to each plant by using different water droppers (2 /h, 4 /h, etc.) and, if necessary, to use more than one water dropper per plant for those plants requiring higher quantities of water.

A water dropper 9 allows a water discharge of about 1 l/h inside the device. Such water dropper 9 is used to carry out two important functions at the moment the pump is turned on and off. When the pump is turned on, the water dropper 9 eliminates the formation of air bubbles inside the pipe 7, and when the pump is turned off, air is let in and the siphon effect is eliminated. Since such discharged water returns back to the container and re-enters into circulation, there is no water loss during the time the pump is activated. The process is simple and does not involve complex or costly valves which would otherwise be needed if the droppers were positioned at a lower level than the container of water as in similar devices. The latter would cause the irrigation to continue even if the pump is turned off, thus rendering the irrigation process uncontrollable.

In merit of the proposed solution and its low consumption, the invention is able to guarantee the reliable and correct functioning of the irrigation device for periods of more than one month.

The functioning of the device by means of low voltage batteries, and the unnecessary need for a water supply, provides certain safety measures for both persons and objects in the operating environment, while providing the needed quantity of water for irrigation, such quantity being conditioned only by the size of the container used.

The capability of the device to turn itself on when water is present in the container renders it very reliable and easy to use. In the absence of water in the container, the device does not work so avoiding any possible burnout of the pump.

The method of time interval selection greatly contributes to the practicability of the device since it is free of any possible programming error or accidental variation of preselected parameters which frequently occur in similar devices with key-in instructions. In addition, the first cycle automatically initiates a few seconds after the immersion of the device 1 in the container of water so enabling the user to verify the correct functioning of the device immediately.

## Claims

1. Automatic device for irrigation, characterized in that it is partially immersed into a container to be filled with water and comprises a timer (5) to enable irrigation at repeated time intervals for a predetermined period, such device being free from any connection to any water supply source, and preferably to any mains voltage supply but comprises a battery (10) for operation.

2. The device according to claim 1 comprising an electronic switch (3,4) which turns on the device (1) when immersed in water and turns off the device (1) when extracted.

3. The device according to claim 1, characterized in that the device (1) assures full and proper operation even if the container of water is positioned at a level higher than the irrigation water droppers (9), by merit of an auxiliary water dropper which re-circulates water, said device preferably comprising a water pump (6).

4. The device according to claim 1, characterized in that the preselected time period during which irrigation takes place is predetermined by a setting switch (2), which is preferably arranged to be set at a chosen angle with respect to the body (1) of the device, especially on the top of the body (1).

5. A water dropper with a tank for the device according to claim 1, characterized in that it is capable of being filled up with water rapidly and delivering water slowly.

6. The water dropper-tank according to claim 5, characterized in that it contains a stop valve (14) which stops the entry of water into the tank (11) when the tank (11) has a predetermined filling level.

7. The water dropper-tank according to claim 5, characterized in that the filling level is selected by positioning the stop valve (14).
